## Europäisches Patentamt

## European Patent Office

## Office européen des brevets

(11) Veröffentlichungsnummer: **0 120 244**
**B1**

(12) **EUROPÄISCHE PATENTSCHRIFT**

(45) Veröffentlichungstag der Patentschrift:
**01.06.88**

(21) Anmeldenummer: **84101312.1**

(22) Anmeldetag: **09.02.84**

(51) Int. Cl.⁴: **B 23 D 61/04, B 23 D 61/14**

(54) **Sägeblatt.**

(30) Priorität: **01.03.83 DE 3307170**

(43) Veröffentlichungstag der Anmeldung:
**03.10.84 Patentblatt 84/40**

(45) Bekanntmachung des Hinweises auf die Patenterteilung:
**01.06.88 Patentblatt 88/22**

(84) Benannte Vertragsstaaten:
**AT BE CH FR GB IT LI LU NL SE**

(56) Entgegenhaltungen:
**AT - A - 319 689**
**DE - A - 2 933 179**
**DE - A - 3 300 791**
**DE - B - 2 746 192**
**GB - A - 2 098 923**
**JP - A - 57 138 522**
**US - A - 2 720 229**
**US - A - 4 179 967**

(73) Patentinhaber: **Wilhelm H. Kullmann Wikus-Sägenfabrik, Meisunger Strasse 30, D-3509 Spangenberg (DE)**

(72) Erfinder: **Kullmann, Jörg, Oberhain 15, D-3509 Spangenberg (DE)**
Erfinder: **Kullmann, Rolf, Oberhain 15, D-3509 Spangenberg (DE)**

(74) Vertreter: **Patentanwälte Dipl.-Ing. Rudolf Bibrach Dipl.-Ing. Elmar Rehberg, Pütterweg 6 Postfach 738, D-3400 Göttingen (DE)**

ACTORUM AG

## Beschreibung

Die Erfindung bezieht sich auf ein Sägeblatt mit den im Oberbegriff der Ansprüche 1 und 6 angegebenen Merkmalen. Die Erfindung lässt sich damit sowohl für Bandsägeblätter wie auch für Kreissägeblätter sowie für Sägeblätter anderer Art anwenden.

Ein Sägeblatt der eingangs beschriebenen Art, also mit Schneidstoff-Platten bestückt, ist aus der DE-A 2 933 179 bekannt. Dabei ist von Zahn zu Zahn eine variierende Teilung vorgesehen. Die Zähne gleicher Art sind zu Zahngruppen zusammengefasst, die sich wiederholen. Durch die verschiedenen Abstände zwischen den Zähnen wird eine starke Verringerung der Schwingungen und ein sehr niedriger Lärmpegel angestrebt. Sämtliche Zähne, seien es die mit Schneidstoff-Platten bestückten Zähne eines Kreissägeblatts oder auch die gefrästen Zähne eines Bandsägeblatts, weisen einen gleichen Wirkspanwinkel auf. Ein ähnliches Sägeblatt ist auch aus der DE-B 2 746 192 bekannt.

Die US-A 4 179 967 zeigt ein gefrästes und geschränktes Bandsägeblatt, bei dem zum Zwecke einer verbesserten Schnittgeschwindigkeit und eines im wesentlichen vibrationsfreien Laufs während des Einsatzes Zahngruppen aus hinsichtlich ihrer Bedeutung und hinsichtlich des eingesetzten Materials gleichartigen Zähne gebildet sind, wobei die einzelnen Zähne einer Zahngruppe sich voneinander unterscheiden, und zwar nicht nur in der Grösse, in der Teilung und im Schränkungswinkel, sondern auch im Wirkspanwinkel. Die Schränkung der Zähne ist dabei so getroffen, dass die seitlichen Zahnspitzen in einer parallelen Ebene zu der Erstreckung des Bandes liegen. Auch die Einschweiftiefe zwischen den Zähnen variiert. Die Herstellung jeweils unterschiedlicher Zähne einer Zahngruppe erscheint insoweit mit vertretbarem Aufwand möglich, als die Zähne aus dem Material des Bandes herausgefräst werden. Dabei lassen sich variierende Teilungen und variierende Wirkspanwinkel relativ einfach verwirklichen. Als zusätzlicher Arbeitsgang kommt dann noch die unterschiedliche Schränkung hinzu, die die Herstellung insoweit aufwendiger macht. Die Standzeit eines solchen Bandsägeblatts richtet sich nach dem verwendeten Material desselben. Standzeiten, wie sie bei Verwendung von hartmetallbestückten Kreissägeblättern möglich sind, werden damit nicht erreicht.

Die US-A 2 720 229 zeigt ein Kreissägeblatt mit einem Grundkörper, der entlang des Umfangs durch je einen Spanraum getrennte und je einen Zahnrücken bildende Zähne aufweist. Jeder Zahn besteht aus einem Vorsprung, in den ein Sitz eingearbeitet ist, der mit einem Hartmetallstück bestückt ist. Die Zähne sind mit übereinstimmender Entfernung voneinander über den Umfang verteilt angeordnet, besitzen also gleiche Teilung. Es sind hier zwei hinsichtlich ihrer Bedeutung ungleiche Arten von Zähnen jeweils abwechselnd vorgesehen, die üblicherweise als Vor- und Nachschneider bezeichnet werden. Die Vor- und Nachschneider sind ähnlich ausgebildet und differieren ansonsten nur in der üblichen Form des Vor- und Nachschneiders. Die Sitze an den Vorsprüngen für die Vor- und die Nachschneider sind unterschiedlich ausgebildet, jedoch sind sämtliche Sitze für die Vorschneider oder für die Nachschneider identisch. Vor- und Nachschneider besitzen positiven Wirkspanwinkel. An einigen Stellen des Umfangs des Kreissägeblatts sind Seitenschneider etwa auf halber Teilung zwischen einem Vor- und einem Nachschneider eingeschoben. Der Seitenschneider ist kürzer ausgebildet als die Vor- und Nachschneider, besitzt jedoch eine grössere Zahnbreite, so dass durch ihn ein sauber begrenzter Schnitt entsteht, der eine Nachbehandlung der geschnittenen Oberfläche vielfach entbehrlich erscheinen lässt. Die Seitenschneider besitzen einen negativen Wirkspanwinkel, was sich jedoch nur hinsichtlich seiner seitlichen Schneidflächen auswirkt.

Die japanische Offenlegungsschrift JP-A 57 138 522 zeigt ein Kreissägeblatt mit zwei Arten von Zähnen. Die eine Art der Zähne ist diamantbestückt. Der Wirkspanwinkel dieser diamantbestückten Zähne kann je nach der Ausbildung des Kreissägeblatts im einzelnen einen Wert von Null oder auch einen negativen Wert aufweisen. Die andere Art der Zähne besteht aus Schnellstahl oder ist hartmetallbestückt. Der Wirkspanwinkel dieser zweiten Art von Zähnen kann Null sein oder einen positiven Wert aufweisen. Die diamantbestückten Zähne stehen in einem bestimmten Verhältnis zu den hartmetallbestückten Zähnen, beispielsweise im Verhältnis 1/3 oder 2/3. Die diamantbestückten Zähne können mit Hartmetallplatten unterfüttert sein. Der Wirkspanwinkel dieser Zähne wird vorzugsweise negativ gewählt, um ein Ausbrechen der Diamantspitzen zu verhindern und die Lebensdauer anzuheben. Die beiden Arten der Zähne werden mit einem guten Schliff versehen. Auch das Nachschleifen der Zähne ist möglich. Dies geschieht vorzugsweise nicht an der Schneidfläche, sondern an der Freifläche. Je grösser der negative Wert des Spanwinkels der diamantbestückten Zähne ist, je grösser kann die Anzahl der Nachschleifbearbeitungen an der Schneide sein, ohne dass damit die Lötstelle der Hartmetall-Unterfütterung des diamantbesetzten Zahns zu klein wird.

Der Erfindung liegt die Aufgabe zugrunde, ein Sägeblatt der eingangs beschriebenen Art, also mit Schneidstoff-Platten bestückt, so weiterzubilden, dass im Zerspanungsprozess mit dem Sägeblatt, also beim Sägen, die durch die Ausbildung des Sägeblatts festgelegten Frequenzen so beeinflusst werden, dass eine Resonanz mit gleichgelagerten Frequenzen des Systems Maschine-Werkzeug-Werkstück möglichst vermieden wird und sich trotzdem ein solches Sägeblatt mit vertretbarem Aufwand herstellen lässt.

Erfindungsgemäss wird dies dadurch erreicht, dass die Sitze gleichartiger Zähne mit von Zahn zu Zahn oder von Zahngruppe zu Zahngruppe variierenden Sitzwinkeln vorgesehen sind, und dass an den Sitzen dieser gleichartigen Zähne die Schneidstoff-Platten mit konstantem oder variablem Spanwinkel so befestigt sind, dass sich variierende positive und/oder negative Wirkspanwinkel an den Schneidstoff-Platten ergeben.

In einer anderen Ausführungsform wird dies dadurch erreicht, dass an den Sitzen dieser gleichartigen Zähne hinsichtlich des Spanwinkels ungleiche Schneidstoff-Platten so befestigt sind, dass sich variierende positive und/oder negative Wirkspanwinkel an den Schneidstoff-Platten ergeben.

Die Erfindung geht von der Erkenntnis aus, möglichst unterschiedliche Bedingungen beim Sägen an den einzelnen Schneidstoff-Platten zu schaffen, damit möglichst umfassend gleichgelagerte Frequenzen, die miteinander in dem Zerspanungsprozess in für diesen schädliche bzw. diesen negativ beeinflussende Resonanzen treten können, zu vermeiden. Die Teilung bestimmt im wesentlichen die zeitliche Aufeinanderfolge des Auftreffens der Schneidkräfte beim Eindringen der Schneidstoff-Platten in den zu schneidenden Werkstoff. Der Wirkspanwinkel beeinflusst wesentlich die Grösse der auftretenden Schnittkräfte, ihre Richtung sowie die Beanspruchung der Verbindung zwischen den Schneidstoff-Platten und den Vorsprüngen am Grundkörper. Überraschenderweise hat es sich gezeigt, dass durch die Kombination von variierender Teilung und variierendem Wirkspanwinkel – obwohl noch eine Reihe weiterer Grössen für das Auftreten gleichgelagerter Frequenzen bestimmend sind, ausreicht, um im Sinne der gestellten Aufgabe zu einem verfahrensoptimalen Arbeiten bei höchsten Standleistungen, also Quadratmeter Schnittfläche pro Band bzw. Blattlänge und hoher spezifischer Schneidleistung zu kommen. Diese Eigenschaften des erfindungsgemässen Sägeblatts wirken sich besonders beim Schneiden schwer zerspanbarer Werkstoffe, wie höher und hochlegierte Stähle, Steine, Glasverbindung usw. aus, kommen aber auch bei unlegierten, kohlenstoffarmen Stählen, die wegen ihrer geringen Eigendämpfungseigenschaften stark zu Resonanzen mit Frequenzen des Systems Maschine-Werkzeug-Werkstück neigen, zu besonderer Bedeutung. Unter der Teilung wird der Abstand von Zahnbrust zu Zahnbrust verstanden, der je nach Ausführungsform auch an verschiedenen geeigneten Stellen zu messen bzw. festzulegen ist. Sofern die Schneidkante senkrecht zur Bewegungsrichtung der Schneidstoff-Platten im Schnittspalt angeordnet ist, wird die Teilung durch den gegenseitigen Abstand zweier aufeinanderfolgender Schneidkanten bestimmt. Ist die Schneidkante dagegen schräg zur Bewegungsrichtung der Schneidstoff-Platten angeordnet, ergibt sich eine Zahnspitze, wobei die seitliche Projektion der Zahnspitzen benachbarter Schneidstoff-Platten die jeweilige Teilung festlegt. Es werden also hier Teilungsfolgen aus jeweils unterschiedlichen aufeinanderfolgenden Teilungen geschaffen, die immer wiederkehrend am Sägeblatt vorgesehen sein können. Es ist aber auch möglich, hier eine sehr grosse Folge von Teilungen zu schaffen, so dass innerhalb begrenzter Abmessungen des Sägeblatts eine Gesetzmässigkeit nicht mehr feststellbar ist. Wesentlich ist jedoch, nicht nur die Teilung zu variieren, sondern in Kombination damit auch den Wirkspanwinkel. Dieser beeinflusst in der Kombination nicht nur Grösse und Richtung der entstehenden Schnittkräfte, sondern auch nachhaltig die Spanschuppenbildung in ihrer Bildungsfrequenz. Die Ausbildung im einzelnen kann dabei so getroffen sein, dass Folgen unterschiedlicher Wirkspanwinkel gebildet sind, wobei die Anzahl der einzelnen unterschiedlichen Wirkspanwinkel in einer Folge nicht unbedingt mit der Anzahl der Teilungen in einer Teilungsfolge übereinstimmen muss.

Es kann die Kombination einer variierenden Teilung und/oder eines variierenden Wirkspanwinkels von Zahn zu Zahn sich ändernd vorgesehen sein. Auf diese Weise wird selbst die einfache Wiederholung gleicher Bedingungen im Bereich zweier aufeinanderfolgender Zähne bzw. Schneidstoff-Platten vermieden.

Mit der erfindungsgemässen Ausbildung des Sägeblatts können auch all jene Vorteile genutzt werden, die an sich schon gegeben sind, wenn ein Sägeblatt mit Schneidstoff-Platten bestückt wird: Die Schneidstoff-Platten können unabhängig von dem Material des Grundkörpers ganz oder weitgehend fertig bearbeitet werden, worauf erst dann die Befestigung der Schneidstoff-Platten am Grundkörper erfolgt. Dabei bleibt das Material des Grundkörpers zäh und duktil, wird also durch einen sonst erforderlichen Härtevorgang nicht mehr negativ beeinflusst. Die Schneidstoff-Platten können auch auf allen Seiten im Sinne der erforderlichen Freischliffe bearbeitet werden, so dass lediglich ihre Befestigung an den Vorsprüngen des Grundkörpers erforderlich ist. Diese Befestigung kann durch Löten, Schweissen oder auch durch Kleben erfolgen, wobei der letztgenannte Verfahrensschritt den besonderen Vorteil bietet, dass er in kaltem oder quasi kaltem, den Werkstoff von Träger und Schneidstoff-Platte nicht beeinflussendem Zustand ausgeführt werden kann. Ein Schleifen oder ein Nachschleifen der Wirkspanwinkel entfällt. Es werden insbesondere gleiche Schneidstoff-Platten, bei denen also die Plattenbrust und der Plattenrücken parallel verlaufen, eingesetzt. Die unterschiedlichen Wirkspanwinkel ergeben sich somit allein schon durch die unterschiedlichen Sitzwinkel. Die variierende Teilung und die variierenden Wirkspanwinkel ergeben sich gleichsam automatisch, ohne dass eine Nacharbeit, beispielsweise durch Schleifen o. dgl. erforderlich ist. Es ist aber auch möglich, hier ungleiche Schneidstoff-Platten gezielt so einzusetzen, dass sich die variierenden Wirkspanwinkel aus den variierenden Sitzwinkeln und der hinsichtlich des Spanwinkels $\beta$ variierenden Ausbildung der Schneidstoff-Platten ergeben.

Als variierende Wirkspanwinkel innerhalb einer Wirkspanwinkelfolge können positive und/oder negative Wirkspanwinkel vorgesehen sein. Variiert man im Bereich der positiven Wirkspanwinkel, dann entsteht ein Sägeblatt mit hoher Schneidfreudigkeit. Negative Wirkspanwinkel ergeben hohe Festigkeiten. Mit einer Erstreckung der variierenden Wirkspanwinkel über beide angegebenen Bereiche erhält man ein besonders vielseitig einsetzbares Sägeblatt.

Die Anzahl der unterschiedlichen Wirkspanwinkel in einer Wirkspanwinkelfolge kann mit der Anzahl der unterschiedlichen Teilungen in einer Teilungsfolge übereinstimmen. Damit wird zwar eine gewisse Regelmässigkeit erzielt; diese ist jedoch im Sinne einer einfachen Herstellbarkeit vorteilhaft. Ausserdem kann die Anzahl der Teilungen und Wirkspanwinkel relativ gross gewählt werden. So ist es auch möglich, die Anzahl der unterschiedlichen Wirkspanwinkel in einer Wirkspanwinkelfolge kleiner oder grösser als die Anzahl der unterschiedlichen Teilungen in einer Teilungsfolge zu wählen. Je nach der Ausbildung entsteht ein einfach herstellbares Sägeblatt, welches für einen grossen Bereich von Werkstückabmessungen eingesetzt werden kann. Andererseits entsteht ein universell anwendbares Sägeblatt mit stabilem Schneidverhalten. Eine Teilungsfolge kann dabei durch die Breite des Fräsers für die Vorsprünge bzw. die Spanräume festgelegt sein.

Die Schneidstoff-Platten können aus Hartmetall, Schnellstahl, keramischem Schneidstoff o. dgl. bestehen. Der keramische Schneidstoff kann ein Ein- oder Mehrschicht-Schneidstoff sein. Die Schneidstoff-Platten können auch aus Schnellstahl bestehen. Dann erhält man ähnliche Eigenschaften wie bei einem Sägeblatt mit auf den Grundkörper aufgeschweisster Leiste aus Schnellstahl, jedoch sind die Materialverluste bei der Herstellung erheblich kleiner.

Es ist auch möglich, dass das Sägeblatt bekanntlich die Sitze gleichartiger Zähne mit von Zahn zu Zahn oder von Zahngruppe zu Zahngruppe gleichen Sitzwinkeln aufweist und dass erfindungsgemäss an den Sitzen dieser gleichartigen Zähne hinsichtlich des Spanwinkels β ungleiche Schneidstoff-Platten so befestigt sind, dass sich variierende positive und/oder negative Wirkspanwinkel γ an den Schneidstoff-Platten ergeben. Die Sitze sind bei dieser Ausführungsform immer im gleichen Winkel angeordnet. Durch die Aufbringung unterschiedlicher Schneidstoff-Platten, bei denen also die Plattenbrust nicht parallel zum Plattenrücken verläuft, werden die unterschiedlichen, variierenden Wirkspanwinkel erreicht. Vorteilhaft ist dabei, dass die Verbindungsstelle zwischen den Schneidstoff-Platten und den Sitzen immer in der gleichen Relativlage erscheint. Die Sitze können mit variierender oder gleicher Teilung am Grundkörper gebildet sein; nach der Befestigung der ungleichen Schneidstoff-Platten liegt auf jeden Fall eine variierende Teilung vor.

Die Sitze an den Vorsprüngen für die Schneidstoff-Platten können zur Variation des Wirkspanwinkels durch Fräsen und/oder Schleifen in Verbindung mit einem Press-Stauchvorgang hergestellt werden. Auch eine Schränkung der Vorsprünge ist nicht ausgeschlossen, obwohl im allgemeinen eine Schränkung nicht erforderlich ist und auch vermieden werden soll. Durch den Press-Stauchvorgang tritt eine Kaltverfestigung des Materials des Grundkörpers an der Befestigungsstelle für die Schneidstoff-Platten auf. Gleichzeitig mit dieser Verfestigung kann auch die Sitzfläche breiter gestaucht werden, damit die Schneidstoff-Platte auf dieser so vergrösserten Fläche noch besser befestigt werden kann. Es ist freilich auch möglich, die Schneidstoff-Platten nach ihrer Befestigung an den Sitzen der Vorsprünge noch zu schleifen; ein solcher Schleifvorgang wird sich aber allenfalls auf eine Fertigbehandlung beziehen. Grössere Formveränderungen sollen dabei nicht mehr auftreten.

Die Erfindung wird anhand mehrerer Ausführungsbeispiele weiter beschrieben. Es zeigt:

Fig. 1 eine räumliche Darstellung der erfindungswesentlichen Teile eines Bandsägeblatts,

Fig. 2 eine Seitenansicht auf einen Teil eines Kreissägeblatts,

Fig. 3 eine Seitenansicht auf ein Sägeblatt mit variabler Teilung, variablem Sitzwinkel und gleich dicken Schneidstoff-Platten und

Fig. 4 eine Seitenansicht auf ein Sägeblatt mit variabler Teilung, konstantem Sitzwinkel und konischen, unterschiedlichen Schneidstoff-Platten.

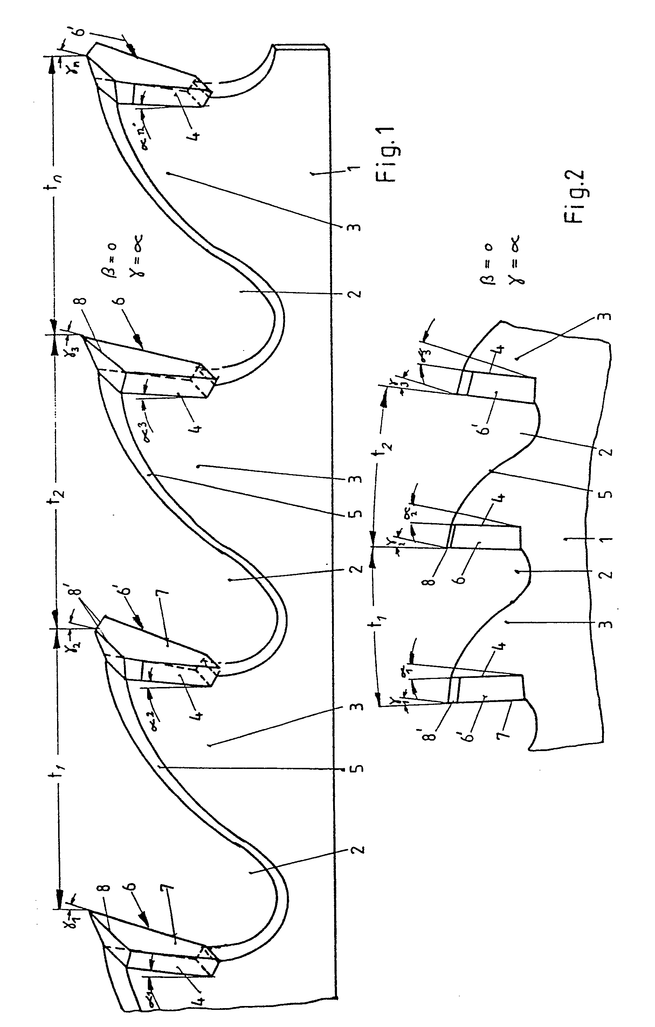

Das in Fig. 1 dargestellte Bandsägeblatt besitzt einen Grundkörper 1, der insbesondere aus duktilem Federstahl gebildet ist. Entlang einer Kante des Bandes sind durch eingefräste Spanräume 2 Vorsprünge 3 gebildet, die auf ihrer Vorderseite je einen Sitz 4 und auf ihrer Rückseite einen Zahnrücken 5 bilden bzw. aufweisen. Jeder Sitz 4 besteht aus einer grösseren, etwa vertikal bzw. geneigt angeordneten und einer dazu etwa rechtwinkligen Fläche. Die Neigung des Sitzes 4 gegenüber der Vertikalebene, bzw. der Normalebene zur Längsrichtung des Bandes, stellt den Sitzwinkel $\alpha$ dar. An den Sitzen 4 ist jeweils eine Schneidstoff-Platte 6, 6' befestigt. Die Schneidstoff-Platten 6, 6' besitzen einen Spanwinkel, der als Spanwinkel $\beta$ bezeichnet ist. Da im Hinblick auf ihre Dicke über ihre vertikale Erstreckung konstante und gleich dicke Schneidstoff-Platten 6, 6' Verwendung finden, ist also $\beta = 0 = const.$ Der jeweilige Wirkspanwinkel $\gamma$ ergibt sich aus $\gamma = \alpha + \beta$; hier als $\alpha = \gamma$ an jeder Einzelstelle. Die unterschiedlichen Wirkspanwinkel $\gamma_1$ bis $\gamma_n$ zeigen an, dass die Wirkspanwinkel derart variierend vorgesehen sind, dass $\gamma_1 \cup \gamma_2$, $\gamma_2 \cup \gamma_3 \ldots \gamma_{n-1} \cup \gamma_n$ ist. Dabei bedeutet n die Anzahl der unterschiedlichen Wirkspanwinkel in einer Wirkspanwinkelfolge. Es versteht sich, dass mehrere gleichartige (oder auch ungleichartige) Wirkspanwinkelfolgen hintereinander an einem Band verwirklicht sein können. Die eingezeichneten Wirkspanwinkel $\gamma_i$ sind mit den Sitzwinkeln $\alpha_i$ identisch, wenn – wie an dem Beispiel der Fig. 1 –

Schneidstoff-Platten 6, 6' eingesetzt werden, die über ihre vertikale Erstreckung gleiche Materialdicke aufweisen, so dass die Zahnbrust 7 parallel zur jeweiligen Fläche des Sitzes 4 verläuft. Es versteht sich, dass es an sich auf den Wirk-Spanwinkel bzw. dessen Variation ankommt, so dass auch die Sitzwinkel $\alpha$ an den Sitzen durchaus übereinstimmend bzw. regelmässig geformt sein könnten, wenn Schneidstoff-Platten 6, 6' Verwendung finden, die unterschiedlich geformt sind. Die Schneidstoff-Platten 6, 6' können so ausgebildet sein, wie dies Fig. 1 zeigt, nämlich als Vorschneider (Schneidstoff-Platten 6') und Nachschneider (Schneidstoff-Platten 6). Es müssen auch nicht unbedingt nur zwei Formen von Schneidstoff-Platten vorgesehen sein. Auch drei oder mehr Arten sind durchaus denkbar. In den Fig. 1 bis 3 sind jedoch gleich dicke Schneidstoff-Platten 6, 6' dargestellt, so dass der Sitzwinkel $\alpha$ des Sitzes 4 identisch mit dem Wirkspanwinkel $\gamma$ der Schneidstoff-Platten ist. Die Befestigung der Schneidstoff-Platten 6, 6' an den Sitzen 4 der Vorsprünge 3 kann durch Schweissen, Hartlöten, Kleben usw. erfolgen.

Wesentlich ist, dass die Wirkspanwinkel variiert werden. Dies geschieht von Zahn zu Zahn bzw. Vorsprung 3 zu Vorsprung 3. In Kombination damit muss auch die Teilung t variiert werden. In Fig. 1 ist dies durch die verschieden grossen Teilungen $t_1 \cup t_2$, usw. $t_{n-1} \cup t_n$ angedeutet. Die Schneidkanten 8, 8' verlaufen in dem gezeigten Ausführungsbeispiel quer zur Vorwärtsbewegung der Schneidstoff-Platten 6, 6' im Sägespalt, so dass die Teilung von Schneidkante 8 zu Schneidkante 8' zwischen jeweils zwei benachbarten Schneidstoff-Platten 6, 6' festgelegt wird. Die Schneidstoff-Platten 6 weisen gleichsam zwei Zahnspitzen und die Schneidstoff-Platte 6' eine Zahnspitze auf. Wenn die Schneidkanten 8 bzw. 8' schräg zur Bewegungsrichtung angeordnet sind, empfiehlt es sich, die Teilung durch die seitliche Projektion der Schneidkanten bzw. Schneidspitzen in eine Ebene festzulegen bzw. hierin zu messen.

Innerhalb eines Sägeblattes, insbesondere eines Bandsägeblattes werden mehrere Folgen von unterschiedlichen Teilungen und mehrere Folgen von unterschiedlichen Wirkspanwinkeln miteinander kombiniert, wobei die Anzahl der Teilungen in der Teilungsfolge mit der Anzahl der Wirkspanwinkel in einer Wirkspanwinkelfolge durchaus nicht übereinstimmen muss. Zwecks vereinfachter Herstellung kann man aber eine Übereinstimmung wählen. Die Schneidstoff-Platten 6, 6' sind vorzugsweise auf allen Oberflächen fertig bearbeitet, so dass eine Nacharbeit nach ihrer Befestigung an den Vorsprüngen 3 nicht mehr erforderlich ist. Die Schneidstoff-Platten 6, 6' können selbstverständlich auch andere Abmessungen und Aussenkonturen aufweisen als es anhand der Fig. 1 dargestellt ist. Es versteht sich aber, dass diese Schneidstoff-Platten 6, 6' in allen Fällen seitlich über die Breite des Grundkörpers 1 vorstehen, so dass Seitenfreiwinkel gebildet sind und eine Schränkung mit den damit verbundenen Nachteilen entfallen kann. Ebenso wird ein Spitzenfreiwinkel eingehalten.

Fig. 2 zeigt einen Ausschnitt aus einem Kreissägeblatt. Auch hier ist die Kombination von variierenden Wirkspanwinkeln mit variierender Teilung verwirklicht.

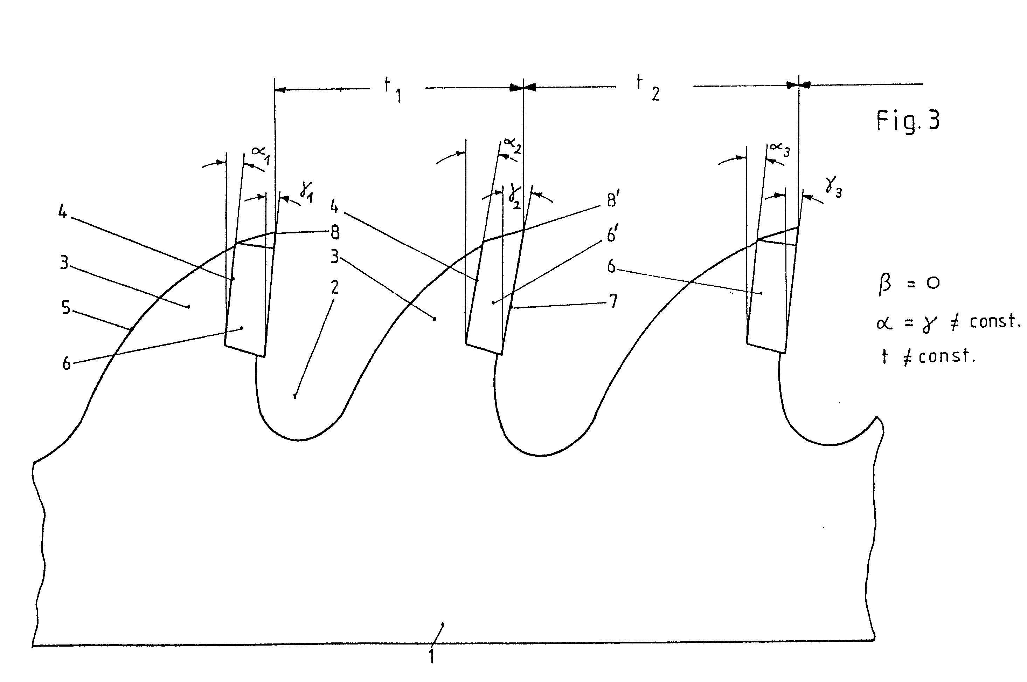

In Fig. 3 ist eine weitere Ausführungsform der Erfindung anhand eines Bandsägeblattes dargestellt: Es finden beispielsweise als Vor- und Nachschneider ausgebildete Schneidstoff-Platten 6, 6' Verwendung, die über ihre Längserstreckung gleich dick ausgebildet sind, so dass ihre Vorderseite, nämlich die Zahnbrust 7, parallel zu ihrer Rückseite verläuft. Damit ist der Wirkwinkel der Schneidstoff-Platten $\beta = 0$. Die Sitze 4 sind in verschiedener Weise gefräst und/oder gestaucht, so dass also an den einzelnen Vorsprüngen 3 unterschiedliche Sitzwinkel $\alpha$ entstehen. Damit ergeben sich unterschiedliche Wirkspanwinkel $\gamma$, die mit den jeweiligen Sitzwinkeln $\alpha$ übereinstimmen, weil $\beta = 0$ ist. Auch hier ist selbstverständlich die Teilung t nicht konstant, sondern variierend ausgebildet. Der Vorteil dieser Ausführungsform liegt darin, Schneidstoff-Platten 6, 6' oder auch nur Schneidstoff-Platten einer einzigen Sorte zu verwenden und trotzdem unterschiedliche Wirkspanwinkel bei unterschiedlicher Teilung zu erzielen.

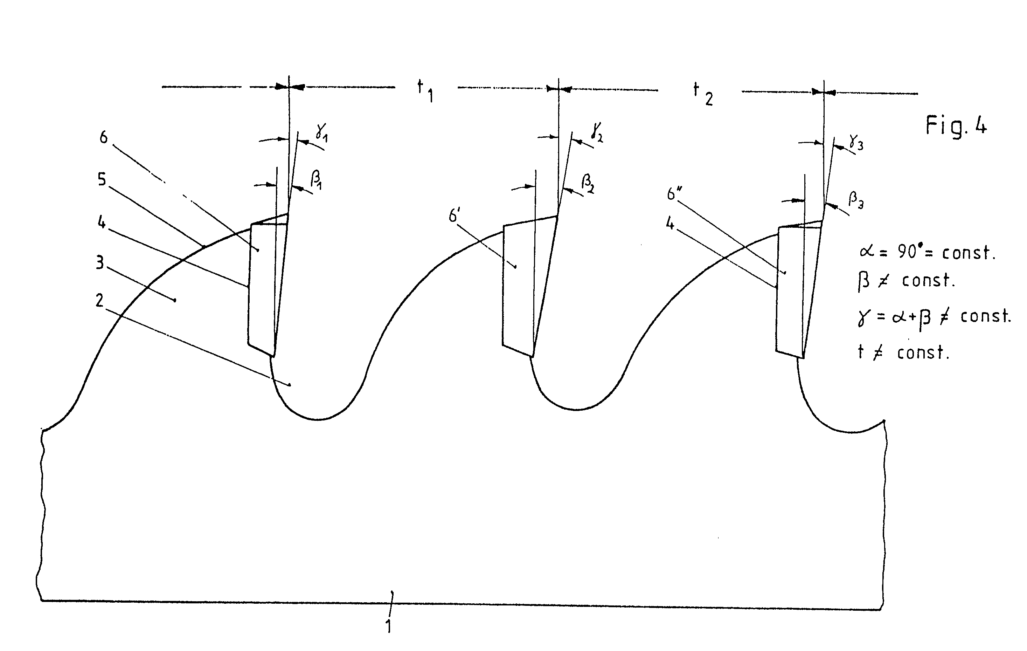

Eine andere Ausführungsform eines Bandsägeblattes ist in Fig. 4 verdeutlicht. Hierbei wird bei variierender Teilung ein konstanter Sitzwinkel $\alpha$, der beispielsweise 90° betragen kann, angewendet. Die Schneidstoff-Platten 6, 6', 6'' besitzen jedoch Spanwinkel, die von 0 verschieden und $\cup$ const. sind. .

Auch auf diese Weise lassen sich variierende Wirkspanwinkel $\gamma$ erzielen, die proportional zu dem jeweiligen Spanwinkel $\beta$ jeder Schneidstoff-Platte sind.

**Patentansprüche**

1. Sägeblatt mit einem Grundkörper (1) aus insbesondere Federstahl, der entlang einer Kante durch je einen Spanraum (2) getrennte und je einen Zahnrücken (5) bildende, aus Schneidstoff-Platten (6, 6') bestehende Zähne aufweist, die hinsichtlich ihrer Bedeutung und/oder hinsichtlich des eingesetzten Materials gleichartig sind, eine Schneidkante (8, 8') und eine Spanfläche besitzen und in Sitzen (4) an Vorsprüngen (3) des Grundkörpers befestigt sind, wobei die Zähne mit von Zahn zu Zahn oder Zahngruppe zu Zahngruppe variierenden Teilungen (t) vorgesehen sind, dadurch gekennzeichnet, dass die Sitze (4) gleichartiger Zähne mit von Zahn zu Zahn oder von Zahngruppe zu Zahngruppe variierenden Sitzwinkeln ($\alpha$ vorgesehen sind, und dass an den Sitzen dieser gleichartigen Zähne die Schneidstoff-Platten (6, 6') mit konstantem oder variablem Spanwinkel ($\beta$) so befestigt sind, dass sich variierende positive und/oder negative Wirkspanwinkel ($\gamma$) an den Schneidstoff-Platten (6, 6') ergeben.

2. Sägeblatt nach Anspruch 1, dadurch gekennzeichnet, dass als variierende Wirkspanwinkel innerhalb einer Wirkspanwinkelfolge positive und/oder negative Wirkspanwinkel vorgesehen sind.

3. Sägeblatt nach Anspruch 1, dadurch gekennzeichnet, dass die Anzahl der unterschiedlichen Wirkspanwinkel in einer Wirkspanwinkelfolge mit der Anzahl der unterschiedlichen Teilungen in einer Teilungsfolge übereinstimmt.

4. Sägeblatt nach Anspruch 1, dadurch gekennzeichnet, dass die Anzahl der unterschiedlichen Wirkspanwinkel in einer Wirkspanwinkelfolge kleiner als die Anzahl der unterschiedlichen Teilungen in einer Teilungsfolge ist.

5. Sägeblatt nach Anspruch 1, dadurch gekennzeichnet, dass die Anzahl der unterschiedlichen Wirkspanwinkel in einer Wirkspanwinkelfolge grösser als die Anzahl der unterschiedlichen Teilungen in einer Teilungsfolge ist.

6. Sägeblatt mit einem Grundkörper (1) aus insbesondere Federstahl, der entlang einer Kante durch je einen Spanraum (2) getrennte und je einen Zahnrücken (5) bildende, aus Schneidstoff-Platten (6, 6') bestehende Zähne aufweist, die hinsichtlich ihrer Bedeutung und/oder hinsichtlich des eingesetzten Materials gleichartig sind, eine Schneidkante (8, 8') und eine Spanfläche besitzen und in Sitzen (4) an Vorsprüngen (3) des Grundkörpers befestigt sind, wobei die Zähne mit von Zahn zu Zahn oder von Zahngruppe zu Zahngruppe variierenden Teilungen (t) und die Sitze gleichartiger Zähne mit von Zahn zu Zahn oder von Zahngruppe zu Zahngruppe gleichen Sitzwinkeln (α vorgesehen sind, dadurch gekennzeichnet, dass an den Sitzen dieser gleichartigen Zähne hinsichtlich des Spanwinkels (β) ungleiche Schneidstoff-Platten so befestigt sind, dass sich variierende positive und/oder negative Wirkspanwinkel (γ) an den Schneidstoff-Platten ergeben.

**Claims**

1. Saw blade with a base (1) made from more particularly spring steel which along an edge exhibits teeth each separated by a gullet (2) and each forming a tooth back (5), comprising plates of cutting material (6, 6'), which teeth are with regard to their significance and/or with regard to the material used similar, possess a cutting edge (8, 8') and a chip surface and are mounted in seatings (4) at projections (3) of the base, the teeth being provided with pitches t varying from tooth to tooth or tooth group to tooth group, characterised in that the seatings (4) of similar teeth are provided with seating angles (α) varying from tooth to tooth or from tooth group to tooth group, and that at the seatings of these similar teeth the plates of cutting material (6, 6') with constant or variable rake angle (β) are fastened in such a manner as to result in varying positive and/or negative effective rake angles (γ) on the plates of cutting material (6, 6').

2. Saw blade according to claim 1, characterised in that positive and/or negative effective rake angles are provided as varying effective rake angles in a sequence of effective rake angles.

3. Saw blade according to claim 1, characterised in that the number of differing effective rake angles in a sequence of effective rake angles accords with the number of differing pitches in a sequence of pitches.

4. Saw blade according to claim 1, characterised in that the number of differing effective rake angles in a sequence of effective rake angles is less than the number of differing pitches in a sequence of pitches.

5. Saw blade according to claim 1, characterised in that the number of differing effective rake angles in a sequence of effective rake angles is greater than the number of differing pitches in a sequence of pitches.

6. Saw blade with a base (1) made of more particularly spring steel which along an edge exhibits teeth each separated by a gullet (2) and each forming a tooth back (5), comprising plates of cutting material (6, 6'), which teeth are with regard to their significance and/or with regard to the material used similar, possess a cutting edge (8, 8') and a chip surface and are fastened in seatings (4) at projections (3) of the base, the teeth being provided with pitches (t) varying from tooth to tooth or tooth group to tooth group and the seatings of similar teeth with seating angles (α) as from tooth to tooth or from tooth group to tooth group, characterised in that at the seatings of these similar teeth are fastened plates of cutting material unlike in respect of rake angle (β) in such a way as to result in varying positive and/or negative effective rake angles (γ) on the plates of cutting material.

**Revendications**

1. Lame de scie comportant un corps de base (1) en particulier en acier à ressort, qui comporte, le long d'un bord, des dents, faites de plaquettes (6, 6') en matériau de coupe, séparées chacune par une espace à copeaux (2) et formant chaque fois un dos (5) de dent, ces dents étant semblables en ce qui concerne leur signification et/ou en ce qui concerne le matériau mis en oeuvre, ces dents possédant une arête de coupe (8, 8') ainsi qu'une surface pour les copeaux et étant fixées dans des logements (4) sur des saillies (3) du corps de base, ces dents étant prévues avec des pas variant de dent à dent ou de groupe de dents à groupe de dents, caractérisée en ce que les logements (4) de dents semblables sont prévus avec des angles de logement (α) qui varient de dent à dent ou de groupe de dents à groupe de dents et que, sur les logements de ces dents semblables, les plaquettes (6, 6') en matériau de coupe sont fixées avec un angle de pente d'affûtage (β) constant ou variable, de sorte qu'on obtient, sur les plaquettes (6, 6') en matériau de coupe, des angles actifs de pente d'affûtage (γ) positifs et/ou négatifs variables.

2. Lame de scie suivant la revendication 1, caractérisée en ce que, comme angles actifs de pente d'affûtage variant à l'intérieur d'une série d'angles actifs de pente d'affûtage, on prévoit des angles actifs de pente d'affûtage positifs et/ou négatifs.

3. Lame de scie suivant la revendication 1, caractérisée en ce que le nombre d'angles actifs différents de pente d'affûtage dans une série de ces angles coïncide avec le nombre de pas différents dans une série de pas.

4. Lame de scie suivant la revendication 1, caractérisée en ce que le nombre d'angles actifs différents de pente d'affûtage dans une série de ces angles est inférieur au nombre de pas différents dans une série de pas.

5. Lame de scie suivant la revendication 1, caractérisée en ce que le nombre d'angles actifs différents de pente d'affûtage dans une série de ces angles est supérieur au nombre de pas différents dans une série de pas.

6. Lame de scie comportant un corps de base (1) en particulier en acier à ressort, qui comporte, le long d'un bord, des dents, faites de plaquettes (6, 6') en matériau de coupe, séparées chacune par un espace à copeaux (2) et formant chaque fois un dos (5) de dent, ces dents étant semblables en ce qui concerne leur signification et/ou en ce qui concerne le matériau mis en oeuvre; ces dents possédant une arête de coupe (8, 8') ainsi qu'une surface pour les copeaux et étant fixées dans des logements (4), sur des saillies (3) du corps de base; ces dents étant prévues avec des pas (t) variant de dent à dent ou de groupe de dents à groupe de dents et les logements de dents semblables étant prévus avec des angles de logement (α) égaux de dent à dent ou de groupe de dents à groupe de dents, caractérisée en ce que, sur les logements de ces dents semblables, en ce qui concerne l'angle de pente d'affûtage (β), des plaquettes inégales en matériau de coupe sont fixées de manière à ce qu'il y ait, sur ces plaquettes, des angles actifs de pente d'affûtage (γ) positifs et/ou négatifs qui varient.

$t_1$    $t_2$    $t_n$

$\gamma_1$   $\gamma_2$   $\gamma_3$   $\gamma_n$

8   8'   6   6'   7   4

$\alpha_1$   $\alpha_2$   $\alpha_3$   $\alpha_n$

$\beta \approx 0$
$\gamma = \alpha$

2   5   3   1

Fig.1

$t_1$   $t_2$

$\gamma_1$   $\gamma_2$   $\gamma_3$

$\alpha_1$   $\alpha_2$   $\alpha_3$

8'   8   6   6'   7   4

$\beta \approx 0$
$\gamma = \alpha$

3   2   1   5   2   3

Fig.2

0 120 244

Fig. 3

$\beta = 0$

$\alpha = \gamma \neq$ const.

$t \neq$ const.

Fig. 4

$\alpha = 90° = $ const.

$\beta \neq$ const.

$\gamma = \alpha + \beta \neq$ const.

$t \neq$ const.

$\gamma_3$ $\beta_3$ $t_2$ 6" 4 $\gamma_2$ $\beta_2$ 6' $t_1$ $\gamma_1$ $\beta_1$ 6 5 4 3 2 1